# EUROPÄISCHE PATENTSCHRIFT

(11) **EP 3 172 671 B1**
(45) Veröffentlichungstag und Bekanntmachung des Hinweises auf die Patenterteilung: **13.12.2023**
(21) Anmeldenummer: 15771516.0
(22) Anmeldetag: 07.09.2015
(51) Int. Cl.: G06F 9/52, G06F 11/18

(54) **VERFAHREN ZUR PARALLELEN VERARBEITUNG VON DATEN IN EINEM RECHNERSYSTEM MIT MEHREREN RECHNEREINHEITEN UND RECHNERSYSTEM MIT MEHREREN RECHNEREINHEITEN**
METHOD FOR PARALLEL PROCESSING OF DATA IN A COMPUTER SYSTEM COMPRISING A PLURALITY OF COMPUTER UNITS AND COMPUTER SYSTEM COMPRISING A PLURALITY OF COMPUTER UNITS
PROCÉDÉ DE TRAITEMENT DE DONNÉES EN PARALLÈLE DANS UN SYSTÈME DE CALCUL COMPORTANT UNE PLURALITÉ D'UNITÉS DE CALCUL ET SYSTÈME DE CALCUL COMPORTANT UNE PLURALITÉ D'UNITÉS DE CALCUL

(30) Priorität: 23.09.2014 DE 102014219179
(43) Veröffentlichungstag der Anmeldung: 31.05.2017
(73) Patentinhaber: Siemens Mobility GmbH, 81739 München (DE)
(72) Erfinder: ECKELMANN-WENDT, Uwe, 38302 Wolfenbüttel (DE); GERKEN, Stefan, 38116 Braunschweig (DE); PINGER, Ralf, 38104 Braunschweig (DE)
(74) Vertreter: Siemens Patent Attorneys
(86) Internationale Anmeldenummer: PCT/EP2015/070389
(87) Internationale Veröffentlichungsnummer: WO 2016/045953

(56) Entgegenhaltungen:
- US-A1- 2008 023 700
- US-A1- 2013 007 412
- US-B1- 7 739 565

## Beschreibung

Die Erfindung betrifft ein Verfahren zur parallelen Verarbeitung von Daten in einem Rechnersystem mit mehreren Rechnereinheiten und einer diesen nachgeordneten Votereinrichtung.

Ein bekanntes Verfahren dieser Art zur sicheren Datenverarbeitung ist in der europäischen Patentanmeldung EP 0 935 198 A1 beschrieben. Bei diesem bekannten Verfahren wird ein Rechnersystem mit als redundante Module bezeichneten Rechnereinheiten verwendet, in denen identische Eingangssignale parallel während asynchroner Arbeitszyklen verarbeitet werden. Dabei wird innerhalb eines Arbeitszyklus mindestens ein aktivierbarer Zeitrahmen festgelegt, innerhalb dessen ein Stellbefehl in seiner Ausführung bestätigt werden muss. Im Besonderen wird für die Dauer eines Arbeitszyklus ein erster und ein zweiter Zeitrahmen festgelegt, wobei der zweite Zeitrahmen durch einen Zeitpunkt entsprechend der maximal zulässigen Zykluszeit begrenzt ist; es wird anschließend mit ersten Votern einer Votereinrichtung überprüft, ob alle Arbeitszyklen innerhalb des ersten oder des zweiten Zeitrahmens Prozessergebnisse abgegeben haben. Danach wird mittels eines den ersten Votern nachgeordneten zweiten Voters durch Vergleich überprüft, ob mindestens zwei der redundanten Module übereinstimmen. Ist dies der Fall, dann wird ein entsprechendes Ausgangssignal abgegeben, das auf einer sicheren Datenverarbeitung beruht.

Gemäß der US 2013/0007412 A1 ist es bekannt, dass die Zuverlässigkeit eines Computerprogramm-Produktes in einem Computersystem verbessert werden kann, wenn die Rechenleistung durch einen ersten Prozessor und einen zweiten Prozessor erbracht wird. Dabei führen der ersten Prozessor und der zweite Prozessor redundante Rechenvorgänge aus, wobei der Ausfall eines der Prozessoren dadurch kompensiert werden kann. Gemäß der US 7,739,565 B1 ist es bekannt, dass ein programmierbarer Logikbaustein an die Vorgaben eines Benutzers angepasst werden kann. Die logischen Verknüpfungen können so konfiguriert sein, dass ein Speicher die Konfiguration speichert und die Verschaltung das spezifische Benutzerdesign umsetzt. Gemäß der US 2008/0023700 A1 ist es bekannt, dass Mehrkernprozessoren durch verschiedene Techniken getestet werden können. Die Testapplikationen sind in Registern der Kerne abgespeichert.

Ferner ist es bekannt, zur sicheren Datenverarbeitung Lockstep-Prozessoren einzusetzen, die Prozessoren mit zwei identischen Kernen darstellen. Die beiden Kerne arbeiten hardwaresynchronisiert und werden über mehrere Voterschaltungen der CPU miteinander verglichen. Hierbei läuft das Betriebssystem synchron und identisch ab.

Der Erfindung liegt die Aufgabe zugrunde, ein Verfahren der eingangs angegebenen Art so auszugestalten, dass eine sichere Datenverarbeitung mit vergleichsweise geringem Aufwand erreichbar ist.

Zur Lösung dieser Aufgabe werden erfindungsgemäß die Daten zu ihrer Speicherung rechnereinheiten-spezifisch codiert und jeweils in rechnereinheiten-spezifischen Speichereinheiten zu rechnereinheiten-spezifischen Blöcken (B1 bis B4) zusammengefasst abgelegt wobei als Speichereinheiten ein allen Rechnereinheiten (K1 bis K4) gemeinsamer Speicher (S) verwendet wird. Die Daten werden nach ihrer Speicherung jeder Rechnereinheit zugeführt, und in den Rechnereinheiten wird jeweils für sich eine Berechnungssignatur bei jedem Rechnerzyklus unter Verwendung von befehlsweise berücksichtigten Speicheradressen und jeweils zugeordnetem Registerwert ermittelt; die ermittelten Berechnungssignaturen der Rechnereinheiten werden der Votereinrichtung zugeführt, die bei einer Übereinstimmung von Berechnungssignaturen der mehreren Rechnereinheiten eine identische Datenverarbeitung signalisiert.

Ein Vorteil des erfindungsgemäßen Verfahrens besteht darin, dass es wegen der Benutzung von Berechnungssignaturen in Kombination mit der Verwendung einer Votereinrichtung einen Nachweis über einen identischen Berechnungsweg gibt. Ein weiterer Vorteil wird darin gesehen, dass die Rechnereinheiten in der Programmabarbeitung nicht miteinander synchronisiert werden müssen. Vorteilhaft ist ferner, dass sogenannte gemischte SIL-Programmabläufe möglich sind und es ermöglichen, nichtsicherheitsrelevante Programmteile mit weniger Aufwand und Rechenzeitanteil zu realisieren und ein einfaches Interruptkonzept zu betreiben. Außerdem werden durch den Vergleich der Berechnungssignaturen auch die Rechnerwerke der Rechnereinheiten mittelbar in den Vergleich mit einbezogen, wodurch die Gefahr unerkannter Fehler verringert wird, indem abweichende Zwischenergebnisse, die sich nicht direkt auf das Endergebnis auswirken, ebenfalls offenbart werden; gegebenenfalls auftretende Abweichungen können sich nicht zum Ausgangssignal durchsetzen. Ohne diese Ausgestaltung könnte das Rechnersystem möglicherweise noch eine ganze Weile weiter laufen, bis sich eine Abweichung ausgabenseitig bemerkbar macht.

Bei dem erfindungsgemäßen Verfahren werden die Daten zu ihrer Speicherung rechnereinheiten-spezifisch codiert und jeweils in rechnereinheiten-spezifischen Speichereinheiten zusammengefasst abgelegt. Damit ergibt sich der wesentliche Vorteil, dass eine Sicherheit gegen gleichartige Fehler erzielt wird.

Erfindungsgemäß ist vorgesehen, dass bei dem erfindungsgemäßen Verfahren als Speichereinheiten ein allen Rechnereinheiten gemeinsamer Speicher verwendet wird, wobei die Daten rechnereinheiten-spezifisch codiert und jeweils in rechnereinheiten-spezifischen Blöcken zusammengefasst abgelegt werden. Ein physisch separater Aufbau der Speicher ist damit nicht mehr notwendig.

Erfindungsgemäß ist vorgesehen, dass bei dem erfindungsgemäßen Verfahren als Rechnereinheiten die Kerne eines Mehrkernprozessors verwendet werden, weil sich damit in den einzelnen Kernen besonders gut vergleichbar rechnen lässt.

Bei dem erfindungsgemäßen Verfahren kann die Bildung der Berechnungssignaturen nach verschiedenen Methoden erfolgen, relativ einfach und insofern vorteilhaft ist es, die Berechnungssignatur durch Addition der Speicheradressen und Registerwerte oder durch ein XOR zu ermitteln. Mit einem XOR lässt sich informationstechnisch besonders schnell rechnen.

Als Votereinrichtung können bei dem erfindungsgemäßen Verfahren unterschiedlich ausgebildete Votereinrichtungen zum Einsatz kommen. Als besonders vorteilhaft und für die Wirkungsweise des erfindungsgemäßen Verfahrens bedeutsam wird es erachtet, wenn als Votereinrichtung eine sichere Rechnerplattform verwendet wird. Diese kann vorteilhaftweise extern zu den Rechnereinheiten angeordnet werden, wodurch Forderungen von Sicherheitsstandards in einfacher Weise entsprochen werden kann.

In vorteilhafter Weise wird bei dem erfindungsgemäßen Verfahren eine Votereinrichtung mit mehreren Votern verwendet, die eingangsseitig parallel mit den Berechnungssignaturen beaufschlagt werden. Durch einen solches Votercluster kann in vorteilhafter Weise die Belastung der einzelnen Voter ausgeglichen werden; außerdem ist dadurch die Möglichkeit geschaffen, einen dynamischen Umzug des Votings von einer Rechnerplattform zu einer anderen während des Betriebs bei Ausfall eines Voters zur Erhöhung der Verfügbarkeit vorzunehmen.

Dabei können bei inhomogener Belastung der mehreren Voter einzelne Berechnungssignaturen relativ wenig belasteten Votern zugewiesen werden.

Außerdem besteht die vorteilhafte Möglichkeit, bei Ausfall eines Voters dessen Voting-Aufgaben auf die übrigen Voter zu verteilen.

Zur Gewinnung eines datensicher erzeugten Ausgangssignals trägt es vorteilhafter Weise auch bei, wenn bei dem erfindungsgemäßen Verfahren mit einem zwei Votern nachgeordneten, kaskadierten Voter die Arbeitsweise der zwei Voter überwacht wird.

Die Erfindung betrifft ferner ein Rechnersystem mit mehreren Rechnereinheiten und einer diesen nachgeordneten Votereinrichtung zur parallelen Verarbeitung von Daten und stellt sich die Aufgabe, ein Rechnersystem, wie es in der eingangs behandelten europäischen Patentanmeldung beschrieben ist, so auszubilden, dass es eine sichere Datenverarbeitung mit vergleichsweise geringem Aufwand ermöglicht.

Zur Lösung dieser Aufgabe sind bei dem erfindungsgemäßen Rechnersystem zur Speicherung der Daten Speichereinheiten vorgesehen, in denen die Daten rechnereinheiten-spezifisch codiert und jeweils in rechnereinheiten-spezifischen Speichereinheiten zusammengefasst abgelegt sind. Dadurch ergibt sich eine besonders sichere Datenverarbeitung bei dem erfindungsgemäßen Rechnersystem. Erfindungsgemäß ist jede Rechnereinheit geeignet, aus den Daten nach ihrer Speicherung jeweils für sich eine Berechnungssignatur bei jedem Rechnerzyklus unter Verwendung von befehlsweise berücksichtigten Speicheradressen und jeweils zugeordnetem Registerwert zu ermitteln, und die Votereinrichtung ist geeignet, bei einer Übereinstimmung von Berechnungssignaturen der mehreren Rechnereinheiten eine sichere Datenverarbeitung zu signalisieren.

Die mit dem erfindungsgemäßen Rechnersystem verbundenen Vorteile entsprechen sinngemäß den Vorteilen, wie sie oben zum erfindungsgemäßen Verfahren angegeben sind.

Vorteilhaft ist jede Rechnereinheit geeignet, die Berechnungssignatur durch Addition der jeweiligen Speicheradressen und Registerwerte oder durch ein XOR zu ermitteln.

Erfindungsgemäß ist vorgesehen, dass den Rechnereinheiten ein gemeinsamer Speicher zum Ablegen der Daten zugeordnet ist. Erfindungsgemäß sind die Rechnereinheiten Kerne eines Mehrkernprozessors; in den einzelnen Kernen eines solchen Prozessors lässt sich besonders gut vergleichbar rechnen.

Die Votereinrichtung kann bei erfindungsgemäßen Rechnersystem eine unterschiedliche Ausführung aufweisen; so ist die Votereinrichtung vorteilhaft eine sichere Rechnerplattform, was an sich bekannt ist. Diese ist zur Erfüllung von Sicherheitsstandards vorteilhaft extern zu den Rechnereinheiten angeordnet.

Die Votereinrichtung kann aus mehreren Votern bestehen, die eingangsseitig parallel mit den Berechnungssignaturen beaufschlagt werden. Dabei kann vorteilhafterweise mindestens zwei Votern ein kaskadierender Voter nachgeordnet sein, der die zwei Voter auf ein Fehlverhalten überwacht.

Es ist anzumerken, dass die oben beschriebenen Ausgestaltungen der Votereinrichtung nicht nur bei dem erfindungsgemäßen Rechnersystem eingesetzt werden können, sondern auch bei anderen Rechnersystemen mit mehreren Rechnereinheiten.

Zur weiteren Erläuterung der Erfindung ist in
Fig. 1 ein Ausführungsbeispiel eines erfindungsgemäßen Rechnersystems schematisch mit seinen erfindungswesentlichen Komponenten und in
Fig. 2 ein Ausführungsbeispiel einer Votereinrichtung dargestellt.

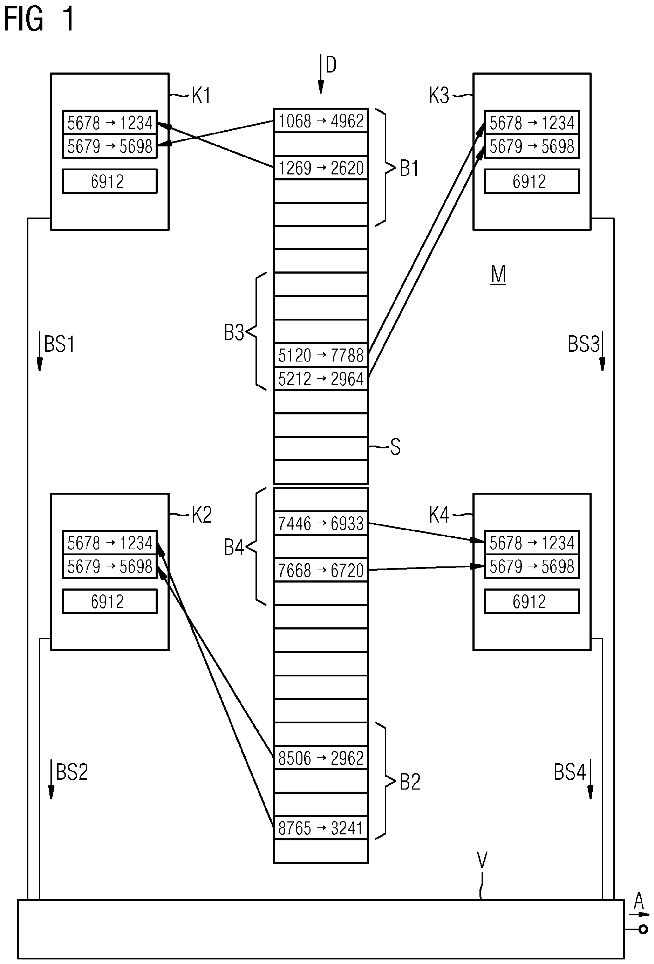

In Fig. 1 ist Rechnersystem dargestellt, das von einem Mehrkernprozessor M mit mehreren Kernen K1 bis K4 gebildet ist; der Mehrkernprozessor M weist in dem dargestellten Ausführungsbeispiel also vier Prozessorkerne auf einem einzigen Chip auf. Außerdem ist ein Speicher S vorhanden, auf den alle Kerne K1 bis K4 zurückgreifen können.

In dem Speicher S sind Daten D, die parallel verarbeitet werden sollen, in rechnereinheiten-spezifischen bzw. kernspezifischen Blöcken B1 bis B4 abgelegt und zwar in codierter Form rechnereinheiten- bzw. kern-spezifisch codiert. So ist beispielsweise im Block B1 codiert eine Adresse "1269" - der einfachen Darstellung halber in Dezimalzahlen angegeben - mit dem zugeordneten Registerwert "2620" in ebenfalls in codierter Form abgelegt.

Zur parallelen Verarbeitung der Daten D werden die codierten Daten mit der Adresse "1269" und dem Registerwert "2620" von dem Kern 1 übernommen und zunächst decodiert, wodurch sich in dem dargestellten Ausführungsbeispiel eine Adresse "5678" und ein Registerwert "1234" ergibt. Danach wird mit dem entsprechenden Befehl eine erste Zwischen-Berechnungssignatur gebildet, die im vorliegenden Beispiel - wiederum als Dezimalzahl - den Wert "6912" ergibt, weil hier zur Bildung der Berechnungssignatur die Addition verwendet wird.

Anschließend wird die Adresse "1068" und der Registerwert "4962" von dem Kern K1 aufgerufen und in ihm decodiert, wodurch sich der decodierte Wert "5679" für die Adresse und der decodierte Wert "5698" für den Registerwert ergibt. Damit wird durch Addition zur ersten Zwischen-Berechnungssignatur eine zweite Zwischen-Berechnungssignatur gebildet, die in der Figur nicht dargestellt ist. Diese Vorgänge wiederholen sich bis zum Ende des jeweiligen durch eine Sequenz von Befehlen gegebenen Rechnerzyklus, so dass am Ende des jeweiligen Rechnerzyklus eine Berechnungssignatur BS1 zur Verfügung steht.

Entsprechendes läuft parallel - wie die Figur 1 zeigt - im Zusammenspiel der Kerne K2 bis K4 mit den Blöcken B2 bis B4 des Speichers S ab, so dass sich nach jeweils einem Rechnerzyklus auch in jedem der Kerne K2 bis K4 über die Zwischen-Berechnungssignaturen eine Berechnungssignatur BS2 bis BS4 ergibt.

Ausdrücklich angemerkt sei, dass die Bildung der Berechnungssignaturen BS1 bis BS4 nicht nur durch die Methode der Addition, sondern auch durch ein XOR oder andere kompliziertere Verfahren wie CRC oder Hashcodes erfolgen kann.

Mit den Kernen K1 bis K4 ist eine externe Votereinrichtung V verbunden, die eingangsseitig mit den Zwischen-Berechnungssignaturen und den Berechnungssignaturen BS1 bis BS4 von den Kernen K1 bis K4 beaufschlagt ist. In der Votereinrichtung V werden die Zwischen-Berechnungssignaturen und die Berechnungssignaturen BS1 bis BS4 miteinander verglichen. Stimmen alle Berechnungssignaturen überein, dann ist mit sehr großer Sicherheit die Datenverarbeitung im gesamten Mehrkernprozessor M einwandfrei verlaufen und die Votereinrichtung V signalisiert an ihrem Ausgang durch Abgabe eines entsprechenden Ausgangssignals A eine einwandfreie, identische und damit als korrekt angenommene Datenverarbeitung.

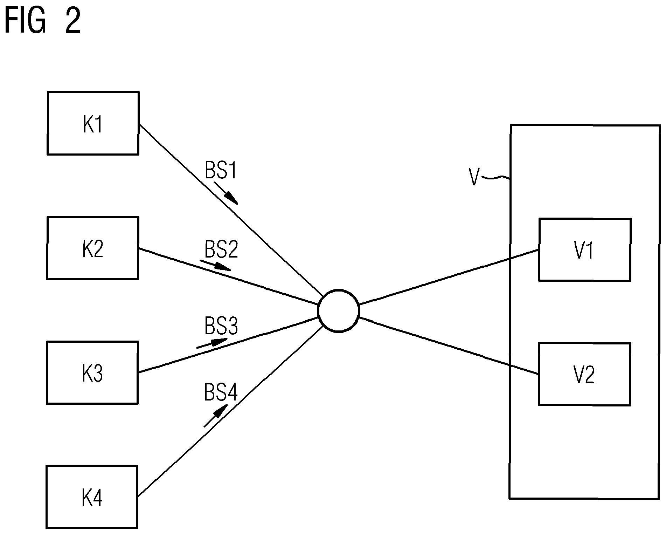

Gemäß Fig. 2 ist die Votereinrichtung als Votercluster ausgebildet, der mehrere einzelne Voter, im dargestellten Ausführungsbeispiel zwei Voter V1 und V2 umfasst. Die Voter V1 und V2 sind über einen Datenknoten mit den Kernen K1 bis K4 verbunden, so dass die beiden Voter V1 und V2 die Berechnungssignaturen BS1 bis BS4 der Kerne K1 bis K4 auf Übereinstimmung überprüfen.

Gegebenenfalls kann den beiden Votern V1 und V2 ein kaskadierter Voter (nicht in der Figur 2 dargestellt) nachgeordnet sein, der Entscheidungen über ein Fehlverhalten der Voter V1 und V2 treffen kann. Damit ergeben sich Vorteile bei der Lastverteilung bei der Bereitstellung der Informationen in einem komplexen Netzwerk.

Ferner kann vorgesehen sein, im Betrieb die Beaufschlagung der Voter V1 und V2 mit den Berechnungssignaturen der Kerne K1 bis K4 zu wechseln bzw. zu verändern, um einen Belastungsausgleich bei den Votern herbei zu führen.

## Patentansprüche

1. Verfahren zur parallelen Verarbeitung von Daten (D) in einem Rechnersystem
• mit mehreren Rechnereinheiten (K1 bis K4), wobei als Rechnereinheiten (K1 bis K4) die Kerne eines Mehrkernprozessors (M) verwendet werden,
• und einer diesen nachgeordneten Votereinrichtung (V), wobei
• die Daten (D) zu ihrer Speicherung rechnereinheiten-spezifisch codiert und jeweils in rechnereinheiten-spezifischen Speichereinheiten zu rechnereinheiten-spezifischen Blöcken (B1 bis B4) zusammengefasst abgelegt werden,
wobei als Speichereinheiten ein allen Rechnereinheiten (K1 bis K4) gemeinsamer Speicher (S) verwendet wird,
• die Daten (D) nach ihrer Speicherung jeder Rechnereinheit (K1 bis K4) zugeführt werden und in den Rechnereinheiten (K1 bis K4) jeweils für sich eine Berechnungssignatur (BS1 bis BS4) bei jedem Rechnerzyklus unter Verwendung von befehlsweise berücksichtigten Speicheradressen und jeweils zugeordnetem Registerwert ermittelt wird,
• die ermittelten Berechnungssignaturen (BS1 bis BS4) der Rechnereinheiten (K1 bis K4) der Votereinrichtung (V) zugeführt werden, und
• die Votereinrichtung (V) bei einer Übereinstimmung der Berechnungssignaturen (BS1 bis BS4) der mehreren Rechnereinheiten (K1 bis K4) eine identische Datenverarbeitung signalisiert.

2. Verfahren nach Anspruch 1, **dadurch gekennzeichnet, dass** die Berechnungssignaturen (BS1 bis BS4) durch Addition der Speicheradressen und Registerwerte oder durch ein XOR ermittelt werden.

3. Verfahren nach einem der vorangehenden Ansprüche, **dadurch gekennzeichnet, dass**
als Votereinrichtung (V) eine sichere Rechnerplattform verwendet wird, die extern zu den Rechnereinheiten (K1 bis K4) angeordnet ist.

4. Verfahren nach Anspruch 3, **dadurch gekennzeichnet, dass** eine Votereinrichtung (V) mit mehreren Votern (V1, V2) verwendet wird, die eingangsseitig parallel mit den Berechnungssignaturen (BS1 bis BS4) beaufschlagt werden.

5. Verfahren nach Anspruch 4, **dadurch gekennzeichnet, dass** bei inhomogener Belastung der mehreren Voter (V1, V2) einzelne Berechnungssignaturen (BS1 bis BS4) relativ wenig belasteten Votern zugewiesen werden.

6. Verfahren nach Anspruch 4 oder 5, **dadurch gekennzeichnet, dass**
bei Ausfall eines Voters (V1, V2) dessen Voting-Aufgaben auf die übrigen Voter verteilt werden.

7. Verfahren nach einem der Ansprüche 4 bis 6, **dadurch gekennzeichnet, dass**
mit einem zwei Votern (V1, V2) nachgeordneten, kaskadierenden Voter die Arbeitsweise der zwei Voter (V1, V2) überwacht wird.

8. Rechnersystem
• mit mehreren Rechnereinheiten (K1 bis K4), wobei als Rechnereinheiten (K1 bis K4) die Kerne eines Mehrkernprozessors (M) verwendet werden,
• und einer diesen nachgeordneten Votereinrichtung (V) zur parallelen Verarbeitung von Daten (D),
bei dem
• zur Speicherung der Daten (D) Speichereinheiten (B1 bis B4) vorgesehen sind, in denen die Daten (D) rechnereinheiten-spezifisch codiert und jeweils in rechnereinheiten-spezifischen Speichereinheiten zu rechnereinheiten-spezifischen Blöcken (B1 bis B4) zusammengefasst abgelegt sind, wobei als Speichereinheiten ein allen Rechnereinheiten (K1 bis K4) gemeinsamer Speicher (S) verwendet wird,
• jede Rechnereinheit (K1 bis K4) geeignet ist, aus den Daten (D) nach ihrer Speicherung jeweils für sich eine Berechnungssignatur (BS1 bis BS4) bei jedem Rechnerzyklus unter Verwendung von befehlsweise berücksichtigten Speicheradressen und jeweils zugeordnetem Registerwert zu ermitteln,
• den Rechnereinheiten (K1 bis K4) eine Votereinrichtung (V) nachgeordnet ist, die geeignet ist, bei einer Übereinstimmung der Berechnungssignaturen (BS1 bis BS4) der mehreren Rechnereinheiten (K1 bis K4) eine identische Datenverarbeitung zu signalisieren.

9. Rechnersystem nach Anspruch 8, **dadurch gekennzeichnet, dass** die Rechnereinheiten Kerne (K1 bis K4) eines Mehrkernprozessors (M) sind.

## Claims

1. Method for parallel processing of data (D) in a computer system
• having a number of computer units (K1 to K4), wherein the cores of a multicore processor (M) are used as computer units (K1 to K4),
• and a voter facility (V) arranged downstream hereof,
wherein
• for its storage the data (D) is encoded in a computer unit-specific manner and in each case is stored together in computer-unit specific storage units to form computer-unit specific blocks (B1 to B4), wherein a memory (S) common to all computer units (K1 to K4) is used as storage units,
• following its storage the data (D) is fed to each computer unit (K1 to K4) and in the computer units (K1 to K4) a calculation signature (BS1 to BS4) is determined in each case separately with each computer cycle using storage addresses taken into account in terms of command and a respectively assigned register value,
• the determined calculation signatures (BS1 to BS4) of the computer units (K1 to K4) are fed to the voter facility (V), and
• the voter facility (V) signals an identical data processing when the calculation signatures (BS1 to BS4) match the number of computer units (K1 to K4).

2. Method according to claim 1, **characterised in that** the calculation signatures (BS1 to BS4) are determined by adding the storage addresses and register values or by means of an XOR.

3. Method according to one of the preceding claims, **characterised in that** a secure computer platform is used as a voter facility (V) and is arranged externally with respect to the computer units (K1 to K4).

4. Method according to claim 3, **characterised in that** a voter facility (V) with a number of voters (V1, V2) is used, which is applied on the input side in parallel with the calculation signatures (BS1 to BS4).

5. Method according to claim 4, **characterised in that** with an inhomogeneous load of the number of voters (V1, V2), individual calculation signatures (BS1 to BS4) are assigned to voters with a relatively minimally load.

6. Method according to claim 4 or 5, **characterised in that** if a voter (V1, V2) fails, its voting tasks are distributed among the remaining voters.

7. Method according to one of claims 4 to 6, **characterised in that** the mode of operation of the two voters (V1, V2) is monitored with a cascading voter arranged downstream of two voters (V1, V2).

8. Computer system
• having a number of computer units (K1 to K4), wherein the cores of a multicore processor (M) are used as computer units (K1 to K4),
• and a voter facility (V) arranged downstream hereof for the parallel processing of data (D),
in which
• in order to store the data (D), storage units (B1 to B4) are provided, in which the data (D) is encoded in a computer unit-specific manner and in each case stored together in computer unit-specific storage units to form computer-unit specific blocks (B1 to B4), wherein a memory (S) common to all computer units (K1 to K4) is used as storage units,
• each computer unit (K1 to K4) is suited to determining a calculation signature (BS1 to BS4) in each case separately with each computer cycle from the data (D) following its storage using storage addresses taken into account in terms of command and an assigned register value in each case,
• a voter facility (V) is arranged downstream of the computer units (K1 to K4), which is suited to signalling an identical data processing when the calculation signatures (BS1 to BS4) of the number of computer units (K1 to K4) match.

9. Computer system according to claim 8, **characterised in that** the computer units are cores (K1 to K4) of a multicore processor (M).

## Revendications

1. Procédé de traitement en parallèle de données (D) dans un système d'ordinateur
• comprenant plusieurs unités (K1 à K4) d'ordinateur, dans lequel on utilise comme unités (K1 à K4) d'ordinateur les noyaux d'un processeur (M) à plusieurs noyaux,
• et un dispositif (V) voteur monté en aval de ceux-ci, dans lequel
• on code, d'une manière spécifique, aux unités d'ordinateur les données (D) pour leur mise en mémoire et on les met, d'une manière rassemblée en des blocs (B1 à B4) spécifiques aux unités d'ordinateur, respectivement dans des unités de mémoire spécifiques aux unités d'ordinateur,
dans lequel on utilise comme unités de mémoire une mémoire (S) commune à toutes les unités (K1 à K4) d'ordinateur,
• on envoie les données (D) après leur mise en mémoire à chaque unité (K1 à K4) d'ordinateur et dans les unités (K1 à K4) d'ordinateur, on détermine respectivement une signature (BS1 à BS4) de calcul pour chaque cycle d'ordinateur, en utilisant des adresses de mémoire prises en compte par l'instruction et respectivement une valeur de registre associée,
• on envoie les signatures (BS1 à BS4) de calcul déterminées des unités (K1 à K4) d'ordinateur au dispositif (V) voteur, et
• le dispositif (V) voteur signale, s'il y a une coïncidence des signatures (BS1 à BS4) de calcul des plusieurs unités (K1 à K4) d'ordinateur, un traitement de données identique.

2. Procédé suivant la revendication 1, **caractérisé en ce que** l'on détermine les signatures (BS1 à BS4) de calcul par addition des adresses de mémoire et des valeurs de registre ou par un OU exclusif.

3. Procédé suivant l'une des revendications précédentes, **caractérisé en ce que** l'on utilise comme dispositif (V) voteur une plateforme d'ordinateur sécurisée, qui est disposée à l'extérieur des unités (K1 à K4) d'ordinateur.

4. Procédé suivant la revendication 3, **caractérisé en ce que** l'on utilise un dispositif (V) voteur ayant plusieurs voteurs (V1, V2), qui sont alimentés du côté de l'entrée en parallèle en les signatures (BS1 à BS4) de calcul.

5. Procédé suivant la revendication 4, **caractérisé en ce que** si plusieurs voteurs (V1, V2) sont chargés d'une manière qui n'est pas homogène, on affecte diverses signatures (BS1 à BS4) de calcul à des voteurs relativement moins chargés.

6. Procédé suivant la revendication 4 ou 5, **caractérisé en ce que** si un voteur (V1, V2) est défaillant, on répartit sa tâche de votation entre les autres voteurs.

7. Procédé suivant l'une des revendications 4 à 6, **caractérisé en ce que** l'on contrôle par un voteur mis en cascade en aval de deux voteurs (V1, V2), le mode de travail des deux voteurs (V1, V2).

8. Système d'ordinateur
• comprenant plusieurs unités (K1 à K4) d'ordinateur, dans lequel on utilise comme unités (K1 à K4) d'ordinateur les noyaux d'un processeur (M) à plusieurs noyaux,
• et un dispositif (V) voteur monté en aval de ceux-ci pour le traitement en parallèle de données (D),
dans lequel
• pour la mise en mémoire des données (D), on prévoit des unités (B1 à B4) de mémoire dans lesquelles on code, d'une manière spécifique, aux unités d'ordinateur des données (D) et on les met, d'une manière rassemblée, en des blocs (B1 à B4) spécifiques aux unités d'ordinateur respectivement dans des unités de mémoire spécifiques aux ordinateurs, dans lequel on utilise comme unités de mémoire une mémoire (S) commune à toutes les unités (K1 à K4) d'ordinateur,
• chaque unité (K1 à K4) d'ordinateur est propre à déterminer à partir des données (D), après leur mise en mémoire, respectivement une signature (BS1 à BS4) de calcul à chaque cycle d'ordinateur, en utilisant des adresses de mémoire prises en compte instruction par instruction et respectivement une valeur de registre associée,
• en aval des unités (K1 à K4) d'ordinateur est monté un dispositif (V) voteur, qui est propre à signaler, s'il y a une coïncidence des signatures (BS1 à BS4) de calcul des plusieurs unités (K1 à K4) d'ordinateur, un traitement de données identique.

9. Système d'ordinateur suivant la revendication 8, **caractérisé en ce que** les unités d'ordinateurs ont des noyaux (K1 à K4) d'un processeur (M) à plusieurs noyaux.
